# EUROPEAN PATENT APPLICATION

(11) **EP 1 870 838 A2**
(43) Date of publication of application: **26.12.2007**
(21) Application number: 07075487.4
(22) Date of filing: 20.06.2007
(51) Int. Cl.: G06K 9/64

(54) **Contour-based object recognition method for a monocular vision system**

(30) Priority: 23.06.2006 US 474244
(71) Applicant: Delphi Technologies, Inc., Troy, Michigan 48007 (US)
(72) Inventor: Schubert, Peter J., Carmel IN 46032-7007 (US)
(74) Representative: Denton, Michael John

(57) **Abstract**

An object recognition method analyzes an imaged object based on its contour. Extracted contours are characterized by wavelets and slope sequence, and compared to sets of stored contours to recognize a known feature. If a match of sufficiently high confidence is not found, the image is distorted to simulate an incrementally different perspective of the imaged object, and the process of contour identification, characterization and comparison is repeated until a match of sufficiently high confidence is found. The cycle of image distortions allow two-dimensional images obtained from a monocular vision system to be analyzed for three-dimensional motion for optimal recognition performance.

## Description

### TECHNICAL FIELD

The present invention relates to monitoring a stream of monocular video images, and more particularly to a method of recognizing an imaged object based on its contour.

### BACKGROUND OF THE INVENTION

Occupant recognition and classification systems are commonly used in motor vehicles for determining if pyrotechnically deployed restraints such as air bags should be deployed in the event of a sufficiently severe crash. Although most current production systems rely exclusively on sensors for measuring physical parameters such as seat force and object proximity, vision-based systems have become economically attractive due to the advent of low-cost digital signal processors and solid-state imaging chips. See, for example, the U.S. Patent No. 6,801,662 and the U.S. Publication No. 2003/0204384 to Owechko et al., and the U.S. Publication No. 2006/0088219 to Zhang et al., each of which is incorporated by reference herein. As disclosed by Owechko et al. and Zhang et al., object features are extracted from a monocular image and presented to a classifier such as a neural network or support vector machine that has been trained off-line with examples of various objects of interest. When more than one classifier is used, the various classification results can be combined or fused to form a single output.

One way to characterize an imaged object is to detect edge boundaries of the imaged data, using the Sobel method, for example. As described by Owechko et al., background data can be removed by masking, and the remaining edge data may be characterized as an array of cells that are then presented to an edge density classifier. However, the extracted edge data contains a significant amount of extraneous information that varies significantly with small changes in orientation of the object, making it difficult to reliably classify the object in a timely fashion. Accordingly, what is needed is an improved method of recognizing an imaged object based on its edge boundaries.

### SUMMARY OF THE INVENTION

The present invention is directed to an improved object recognition method in which the contours (i.e., outlines or profiles) of an imaged object is identified, characterized by wavelets and slope sequence, and compared to sets of stored contours. If a match of sufficiently high confidence is not found, the image is distorted to simulate an incrementally different perspective of the imaged object, and the process of contour identification, characterization and comparison is repeated until a match of sufficiently high confidence is found. The cycle of image distortions allows two-dimensional images obtained from a monocular vision system to be analyzed for three-dimensional motion for optimal recognition performance.

### BRIEF DESCRIPTION OF THE DRAWINGS

FIG. 1 is a diagram of a vehicle passenger compartment and a monocular occupant recognition system, including a digital camera and a digital signal processor (DSP).
FIG. 2 is a main flow diagram representative of contour-based object recognition method implemented by the DSP of FIG. 1 according to this invention;
FIG. 3 is a flow diagram detailing a portion of the main flow diagram of FIG. 2 pertaining to contour connection; and
FIG. 4 is a diagram of a distortion grid used by the flow diagram of FIG.
2. to simulate an incrementally different perspective of an imaged object that has not been recognized.

### DESCRIPTION OF THE PREFERRED EMBODIMENT

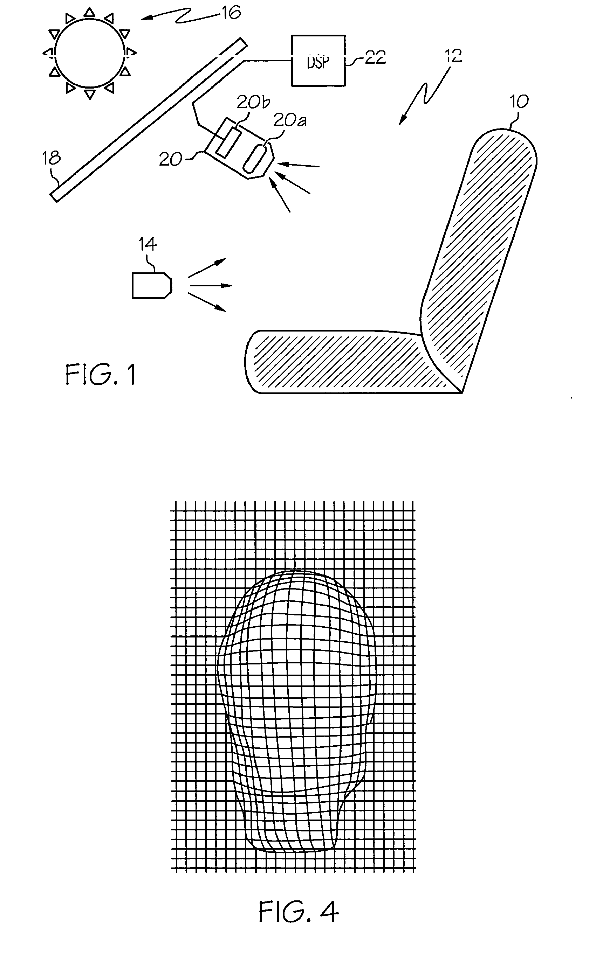

The method of the present invention is described herein in the context of a vision-based vehicle occupant recognition system, but it should be recognized that the method is equally applicable to other object recognition systems, whether vehicular or non-vehicular. Referring to FIG. 1, the vehicle environment includes a passenger seat 10 mounted in a cabin 12. The seat 10 is illuminated by both an active light source 14 and an ambient light source, as designated by sun 16. The active light source 14 may be one or more light emitting diodes that emit light in a visible or near-infrared wavelength band from a central location such as the interior rear-view mirror (not shown). The ambient light source may be solar as indicated, or may emanate from other sources such as roadside lights, and typically enters the cabin 12 through a window 18.

The cabin 12 is equipped with a monocular occupant recognition system including the active light source 14, a digital camera (DC) 20 and a digital signal processor (DSP) 22. Active and ambient light reflected from seat 10 and any occupant thereof is detected and imaged by camera 20, which typically includes an imaging lens 20a and a solid-state imaging chip 20b. The imaging chip 20b is a multi-pixel array that is responsive to the impinging light content, and creates a corresponding digital image. The DSP 22 processes images produced by imaging chip 20b, and typically functions to locate objects of interest in the image, such as human occupants or infant car seats. For example, DSP 22 can be programmed to recognize the presence of a human occupant, to classify the occupant, and to determine the position of a recognized occupant relative to an air bag deployment zone.

In general, the present invention is directed to a processing method carried out by DSP 22 for recognizing an imaged object based on its contour - in other words, its silhouette outline. In the realm of human subjects, well-known profiles (i.e., contours) include those of Alfred Hitchcock or John F. Kennedy, for example. Other less famous individuals, and non-human objects as well, are routinely perceived by their contours. According to the invention, the contours of the imaged object are first identified and then characterized for comparison with a library of objects that have been similarly characterized. If a match of sufficiently high confidence is not found, the image is distorted to simulate an incrementally different perspective of the imaged object, and the process of contour identification, characterization and comparison is repeated until a match of sufficiently high confidence is found. The cycle of image distortions allow two-dimensional images obtained from the monocular vision system of FIG. 1 to be analyzed for three-dimensional motion to provide enhanced recognition performance.

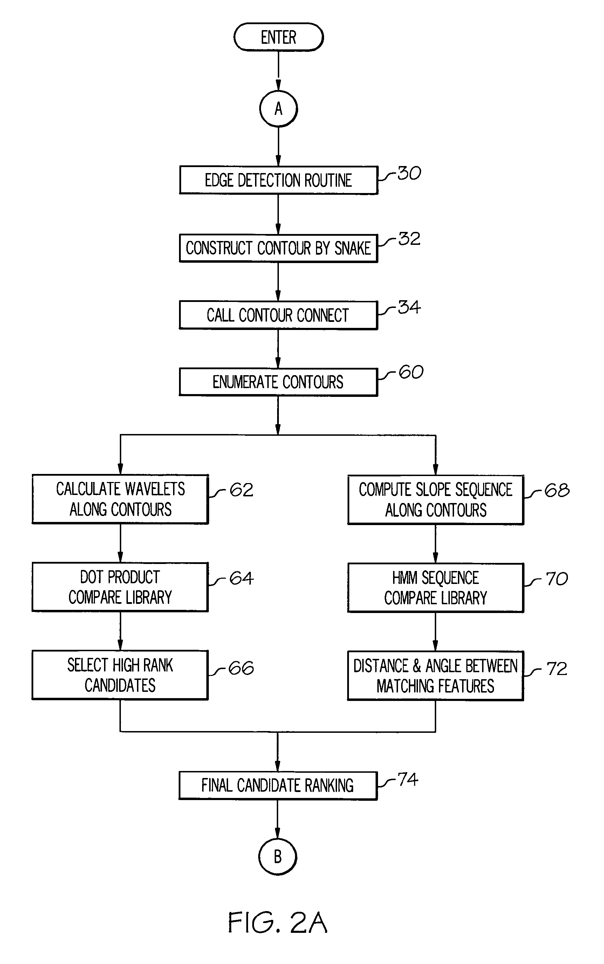

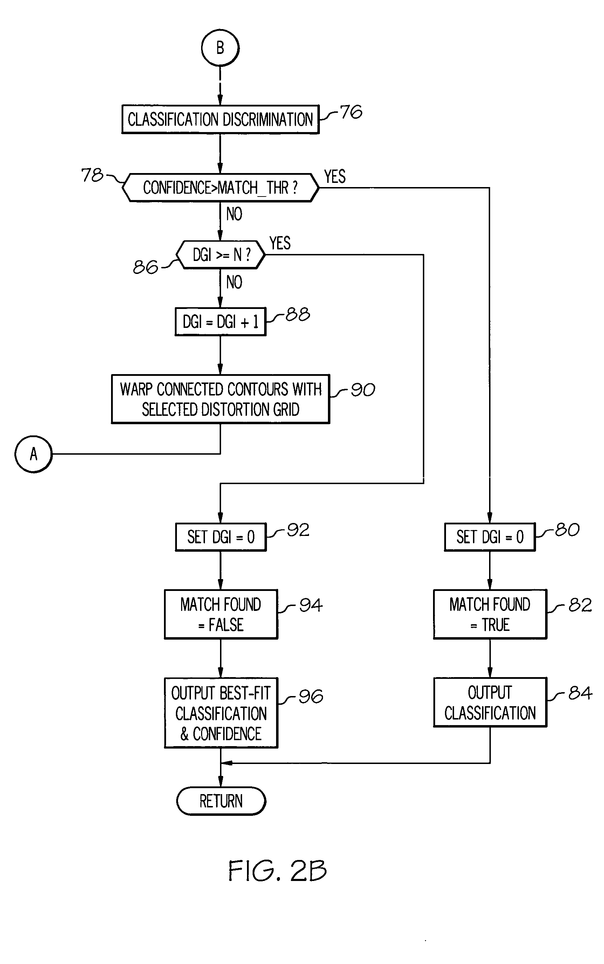

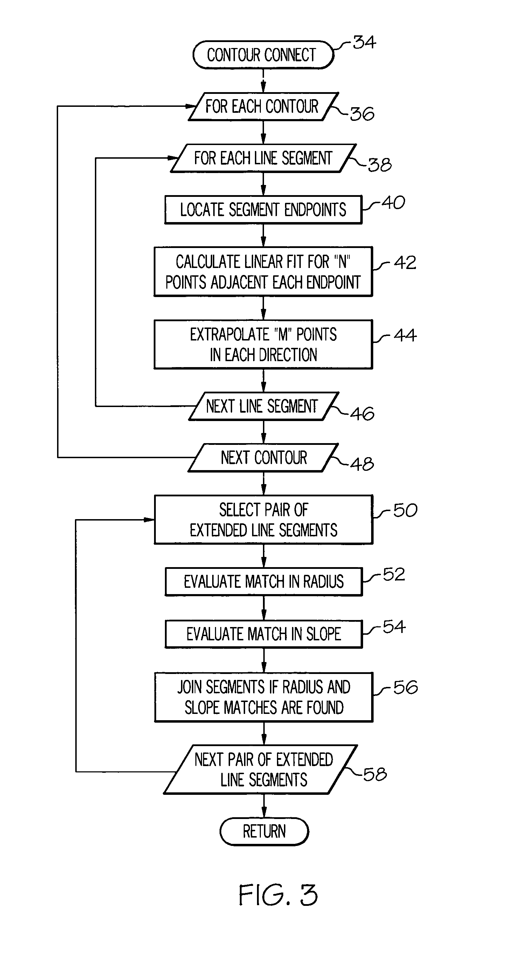

The flow diagram of FIG. 2 depicts a routine executed by DSP 22 for each digital image acquired by imaging chip 20b. Initially, the block 30 is executed to apply an edge detection routine (based on the Sobel method, for example) to the image to identify edge boundaries of the imaged data. As described by Owechko et al., for example, background edge data can be removed by masking. Next, the block 32 applies a snake function (i.e., an energy minimizing spline that deforms to fit local minima) to the edge data to construct nearly contiguous smoothed contours based on the collection of edges. Each such contour comprises a number of non-linear segments, often with discontinuities between adjacent segments. To minimize the number of discontinuities, the block 34 calls Contour Connect, a routine described below in reference to FIG. 3.

Referring to FIG. 3, and in particular to block 36, the contour connect routine 34 initially identifies the line segments of each contour constructed at block 32 of FIG. 2. The blocks 36, 38, 46 and 48 define a pair of nested loops for evaluating the line segments of each contour. For each segment of each contour: the block 40 locates the segment endpoints; the block 42 linearly characterizes "n" successive points at each end of the segment; and block 44 uses the linear characterizations to extrapolate an additional "m" points beyond each of the endpoints. Once all of the line segments have been extended by extrapolation, block 50 selects a pair of extended line segments, and blocks 52, 54 and 56 compare the selected pair of segments to determine if they should be joined. The block 52 determines if the extrapolated portions of the segments are within a given radius of each other; and the block 54 determines whether their slopes are similar. The radius and slope thresholds may be calibrated values as suggested, or they may be adaptively selected based on prior classification attempts or some other factors. In any event, if the slope and radius criteria are met, the block 56 joins the selected pair of line segments using a second-order or third-order polynomial interpolation between the last "k" points of each segment. As indicated at block 58, the blocks 50-56 are then re-executed to select another pair of extended line segments, and join them if appropriate. The contour connect routine 34 is exited when all possible combinations of contour line segments have been selected and join-processed.

Returning to FIG. 2, the block 60 enumerates the reconstructed contours, and the blocks 62-66 and 68-72 conduct parallel independent characterizations of the enumerated contours. Then the block 74 determines an overall ranking of potential candidates for classification discrimination.

The left assessment path characterizes the enumerated contours using a wavelet transformation. The block 62 computes wavelet coefficients (using a Haar wavelet transform, for example) that characterize the relative proportions of curvature along the enumerated contours, and block 64 compares the wavelet coefficient vectors to a library of vectors accumulated in offline training based on pre-defined contours. Horizontal, vertical or diagonal wavelets may be used, with either normal or over-complete spatial distribution. The calculated wavelet coefficient vectors can be compared to the library vectors using a dot-product calculation or some other measure of separation distance. The coefficient vectors for each contour will match the library vectors to varying degrees, and block 66 stores the highest-ranking matches along with the corresponding library object. In general, the rankings indicate the likelihood of a subset match (for example, JFK-forehead or Hitchcock-jowl), do not provide a sufficient basis to reliably discriminate a complete object.

The right assessment path characterizes the enumerated contours by slope sequence. First, the block 68 identifies a series of points along each enumerated contour, and then computes the slopes of lines connecting successive points. This sequence of numerical slope values characterizes the progression of angle changes along the contour. The block 70 then evaluates the slope sequences relative to library of sequences accumulated in off-line training based on pre-defined contours. Preferably, this is achieved by using Hidden Markov Models (HMM) to evaluate both the real-time and off-line slope sequences. The result of the HMM sequencing will be a list of candidate features for each of the enumerated contours. Block 72 identifies the candidate features that are common to two or more of the enumerated contours, and computes the distance and angle between them to determine the degree to which their spatial arrangement corresponds to a predefined object or contour. The computed distance and angle essentially represent a confidence metric, which is used to rank the identified candidate features. The overall ranking of block 74 is determined by comparing the rankings of the left and right paths, and using the wavelet-based ranking to boost the HMM ranking of features that are highly ranked by both paths. For example, if candidate features A and B are highly ranked based on the right assessment path, and the left assessment path identified candidate feature B as a close match, block 74 would increase the ranking metric of feature B. Block 74 then evaluates the radius and angle between the centroids of highly ranked features and matches them using a pattern matching technique such as neural network or support vector machine to create a meta-ranking of the candidate features.

After the candidate features have been ranked, the blocks 76 and 78 are executed to determine if an object classification has been achieved. This is done by combining the confidence metrics of the final candidates of block 74, and comparing the confidence to a threshold MATCH_THR such as 90%. The threshold MATCH_THR may be a fixed calibrated threshold as indicated or may be subject to variation, by an adaptive function for example. In any event, if the combined confidence metric is sufficiently high, the blocks 80, 82 and 84 are executed to reset a distortion grid index (DGI) to zero, to set MATCH FOUND to True, and to output the object classification.

If the combined confidence metric determined at block 76 is insufficient to reliably identify an object, the blocks 86, 88 and 90 are executed to warp the image data using a distortion grid, and blocks 30-34 and 60-78 are re-executed to check for a match. Warping the image with a distortion grid effectively changes the perspective of the imaged object (the seat occupant, for example), possibly offering a closer match with the library patterns. Several different kinds of distortion grids can be used to produce different effects. FIG. 4 illustrates a simple non-uniform distortion grid. Other distortion grids include lateral expansion or dilation and vertical expansion or dilation to respectively simulate lateral or vertical movement of the object. The distortion grid can also radially dilate the image to change the apparent range to the object, or rotate the image. Also, various combinations of distortion grids can be used. Referring to FIG. 2, so long as the distortion grid index is less than a calibrated number N (as determined at block 86), the block 88 increments DGI (from zero to one, for example), and the block 90 applies a corresponding distortion grid to the image. If a match is found at block 78, the blocks 80-84 are executed as described above to reset DGI to zero, set MATCH FOUND to True, and output the object classification. If a match is not found, block 88 increments DGI and block 90 applies a different distortion grid to the image. The process is repeated until a match is found, or until DGI has been incremented to N. If desired, the number N may be adaptively adjusted based on the results achieved. For example, the number N may be increased if the iterative warping process increases the matching confidence, and decreased if the process fails to improve the matching confidence. Also, if certain distortion grids tend to improve matching confidence more than others, the order in which the grids are applied can be changed to optimize the recognition performance. In any event, the distortion grids are exhausted when DGI has been incremented to N, and blocks 92, 94 and 96 are executed to reset DGI to zero, to set MATCH FOUND to False, and to output the best-match object classification along with its confidence value.

In summary, the present invention provides an improved method of recognizing an imaged object based upon its contours. The contour characterization approximates the human perception of objects by their outlines, and the process of successively warping the image with different distortion grids allows two-dimensional images obtained from a monocular vision system to be analyzed for three-dimensional motion. The method can be used to recognize a specific object (as specific person, for example) or a certain class of objects (missiles and aircraft, for example). While the invention has been described in reference to the illustrated embodiment, it should be understood that various modifications in addition to those mentioned above would occur to persons skilled in the art. Accordingly, it is intended that the invention not be limited to the disclosed embodiment, but that it have the full scope permitted by the language of the following claims.

## Claims

1. A method of recognizing an object imaged by a monocular vision system, comprising the steps of:
(a) identifying edge boundary segments of the imaged object in a digital image produced by said vision system;
(b) constructing one or more contours linking adjacent edge boundary segments;
(c) characterizing said contours;
(d) comparing said **characterized** contours with a library of objects that have been **characterized by** contour to determine whether the imaged object matches an object in said library of objects; and
(e) if the imaged object does not match an object in said library of objects, warping said digital image and repeating steps (a), (b), (c) and (d).

2. The method of claim 1, where step (a) includes the steps of:
processing the digital image to detect edge boundaries of the imaged object; and
applying a snake routine to the detected edge boundaries to produce said edge boundary segments.

3. The method of claim 1, where step (b) includes the steps of:
extending said edge boundary segments by extrapolation; and
joining extended edge boundary segments meeting slope and separation distance criteria.

4. A method of claim 3, where said edge boundary segments are joined by polynomial interpolation between end portions of such segments.

5. The method of claim 1, where step (c) includes the step of:
computing a slope sequence for each of said contours.

6. The method of claim 5, where step (d) includes the steps of:
evaluating the computed slope sequences with Hidden Markov Models to produce a list of candidate features from said library of objects;
identifying candidate features that are common to at least two of the contours; and
determining a first ranking of candidate features based on a degree to which a spatial arrangment of the identified candidate features corresponds to an object in said library of objects.

7. The method of claim 6, including the steps of:
computing wavelet coefficient vectors that characterize a relative proportion of curvature of said contours;
comparing said wavelet coefficient vectors with a library of objects whose contours have been **characterized by** wavelet coefficient vectors to determine whether the contour matches a contour in said library of contours;
determining a second ranking of candidate features based on a degree to which said wavelet coefficient vectors match contours in said library of contours; and
determining an overall ranking of candidate features based on said first and second rankings.

8. The method of claim 1, where step (e) includes the steps of:
selecting a distortion grid from a set of stored distortion grids;
applying the selected distortion grid to said digital image to warp said digital image; and
repeating step (e) until the stored distortion grids are exhausted or the imaged object matches an object in said library of objects.
